# EUROPÄISCHE PATENTSCHRIFT

(11) **EP 0 470 388 B1**
(45) Veröffentlichungstag und Bekanntmachung des Hinweises auf die Patenterteilung: **09.03.1994**
(21) Anmeldenummer: 91111572.3
(22) Anmeldetag: 11.07.1991
(51) Int. Cl.: F16B 31/02

(54) **Abreisskopfschraube**
Belt with shearable head
Boulon à tête frangible

(30) Priorität: 08.08.1990 DE 9011571 U
(43) Veröffentlichungstag der Anmeldung: 12.02.1992
(73) Patentinhaber: GERHARD PETRI GmbH & CO. KG ELEKTROTECHNISCHE FABRIK, D-95028 Hof (DE)
(72) Erfinder: Petri, Manfred, Dr., W-8670 Hof/Saale (DE)
(74) Vertreter: Strobel, Wolfgang, Dipl.-Ing.

(56) Entgegenhaltungen:
- DE-U- 9 011 571
- FR-A- 2 554 186
- US-A- 3 498 174

## Beschreibung

Die vorliegende Erfindung betrifft eine Abreißkopfschraube, nach dem Oberbegriff des Anspruchs 1. Eine derartige Schraube ist aus der US-A-3 498 174 bekannt.

Zum Verbinden von Kabeln werden herkömmlicherweise Schraubverbinder oder Kabelverbindungsklemmen verwendet, in die Abreißkopfschrauben eingeschraubt werden, und so das Kabel festgeklemmt wird.

Eine gattungsgemäße Abreißkopfschraube weist einen Klemm- oder Gewindeabschnitt mit einem Außengewinde auf. Sie ist an ihrem dem Kabel zugewandten Ende sphärisch ausgebildet. Die Abreißkopfschraube weist weiterhin einen Kopfabschnitt auf, der von dem Gewindeabschnitt bei einem bestimmten Anzugsmoment abgetrennt wird. Hierzu wird eine Verjüngung zwischen Kopfabschnitt und Gewindeabschnitt im Durchmesser vorgesehen und wird weiterhin eine Innenausnehmung vorgesehen, die sich durch den Kopfabschnitt hindurch und zumindest teilweise in den Gewindeabschnitt hinein erstreckt.

Das Abtrennen des Kopfabschnitts erfolgt unter gleichzeitigem Klemmen des Kabels, wobei die Anpreßkraft einen bestimmten wert nicht unter- bzw. überschreiten soll, damit das Kabel einerseits nicht beschädigt und andererseits aber eine dauerhafte, zuverlässige mechanische und somit auch elektrische Verbindung hergestellt wird. Demzufolge ist die verbleibende wandstärke zwischen Außendurchmesser des Kopfabschnitts und Innendurchmesser des Kopfabschnitts im Bereich seiner Verjüngung entsprechend ausgelegt, sodaß der Kopfabschnitt bei einem bestimmten aufgebrachten Drehmoment fest mit dem Beginn des Gewindeabschnitts abreißt.

Nachteilig ist beim Stand der Technik jedoch, daß aufgrund der als Sechskant ausgebildeten in den Gewindeabschnitt hineinreichenden Innenausnehmung ein entsprechendes Werkzeug bis in den Gewindeabschnitt hineingesteckt werden kann, sodaß das Anzugsmoment direkt auf den Gewindeabschnitt übertragen wird, und somit ein Abreißen des Kopfabschnittes umgangen werden könnte. Demzufolge ist in dem Gewindeabschnitt die Innenausnehmung mittels einer Hartgummieinlage verschlossen, welche festsitzend in die Innenausnehmung eingebracht ist.

Dies hat wiederum den Nachteil, daß, wenn zu einem späteren Zeitpunkt die Abreißkopfschraube wieder gelöst werden soll, die Verschließeinlage nur schwer wieder aus der Innenausnehmung herausbringbar ist, sodaß ein erneutes Lösen der Abreißkopfschraube unter Umständen unmöglich wird.

Der vorliegenden Erfindung liegt deshalb die Aufgabe zugrunde, eine Abreißkopfschraube der eingangs genannten Art zu schaffen, bei der nach Abtrennen des Kopfabschnittes die im Gewindeabschnitt verbleibende Innenausnehmung offen zugänglich ist, und die Wiederlösbarkeit der Kabel- oder anderer Verbindungen möglich ist

Diese Aufgabe wird durch die kennzeichnenden Merkmale des Anspruchs 1 gelöst.

Dadurch, daß im Bereich des Kopfabschnitts eine Sicherungseinrichtung der Innenausnehmung vorgesehen ist, wird einerseits erreicht, daß die Innenausnehmung im Bereich des Gewindeabschnitts vor dem Abtrennen des Abschnitts unzugänglich ist, wodurch verhindert wird, daß das Anzugsmoment direkt auf den Gewindeabschnitt übertragen wird und damit die Gefahr eines unkontrollierten Anziehens der Abreißkopfschraube vermieden wird, und weiterhin die Sicherungseinrichtung zusammen mit dem Kopfabschnitt abgetrennt wird, wodurch die Innenausnehmung im Gewindeabschnitt frei zugänglich wird.

Weitere Vorteile der Erfindung ergeben sich aus den Unterabschnitten.

In einer besonders einfachen Ausführungsform wird die Sicherungseinrichtung dadurch geschaffen, daß eine Einrichtung zur Verringerung des Innendurchmessers vorgesehen ist. Diese kann beispielsweise darin bestehen, daß eine Materialschicht beispielsweise in Form eines Siegellacks oder dergleichen in die Innenausnehmung eingebracht wird, so daß erst durch Zerstörung dieser Schicht ein Werkzeug bis in den Bereich des Gewindeabschnitts vordringen kann.

Alternativ dazu kann beispielsweise der obere Randbereich der Innenausnehmung im Kopfabschnitt verstemmt sein, sodaß ebenfalls ein Eindringen eines entsprechenden Werkzeugs in die Innenausnehmung vor dem Abtrennen des Kopfabschnitts verhindert wird.

Weiterhin kann die Sicherungseinrichtung auch in Form eines Verschlußstopfens ausgebildet sein, der entweder in der Innenausnehmung im Bereich des Kopfabschnitts versenkt eingebracht ist oder einen Flanschbereich aufweist, der den oberen Rand der Innenausnehmung überdeckt und dadurch den Verschlußstopfen an einem Hineinwandern in die Innenausnehmung hindert.

Um einerseits eine fertigungstechnisch einfache Ausbildung des Kopfabschnitts bei gleichzeitiger guter Ausbildung einer Angriffsfläche für das Werkzeug zu schaffen, ist die Außenkontur des Kopfabschnitts überwiegend kreisförmig ausgebildet, wobei der Kreis zwei parallel verlaufende ihn schneidende bzw. verkürzende geradlinige Außenabschnitte zur Ausbildung einer Schlüsselbreite aufweist. Diese kann beispielsweise durch Anfräsen erzeugt werden.

In einer alternativen Ausführungsform kann der Kopfbereich als Außensechskant ausgebildet sein.

Weiterhin wird eine besonders einfache und fertigungstechnisch kostengünstige Ausgestaltung der erfindungsgemäßen Abreißkopfschraube dadurch erreicht, daß die Innenausnehmung im Bereich des Kopfabschnitts als Bohrung ausgebildet ist.

Um eine besonders gute leitende Verbindung der Abreißkopfschraube einerseits und eine exakte Übertragung des Anzugsdrehmomentes im Bereich des Gewindeabschnitts zu ermöglichen, weist der Gewindeabschnitt ein gerolltes Außengewinde auf. Dies hat weiterhin den Vorteil, daß das Gewinde sehr schnell und daher kostengünstig herstellbar ist.

Weiterhin ergibt sich vorteilhafterweise eine kürzere Fertigungszeit, wenn nur im Bereich des Gewindeabschnitts die Innenausnehmung profiliert ist, beispielsweise als Innensechskant, Schlitz oder Kreuzschlitz ausgebildet ist.

Weitere Einzelheiten, Merkmale und Vorteile der Erfindung ergeben sich aus der nachfolgenden Beschreibung unter Bezugnahme auf die Zeichnung. Darin zeigt:
- Figur 1: eine erfindungsgemäße Abreißkopfschraube mit einer ersten Ausführungsform der Sicherungseinrichtung;
- Figur 2: eine erfindungsgemäße Abreißkopfschraube mit einer zweiten Ausführungsform der Sicherungseinrichtung;
- Figur 3: eine erfindungsgemäße Abreißkopfschraube mit einer dritten Ausführungsform der Sicherungseinrichtung;
- Figur 4: eine erfindungsgemäße Abreißkopfschraube mit einer vierten Ausführungsform der Sicherungseinrichtung;
- Figur 5: eine Draufsicht von oben auf die Abreißkopfschraube ohne Sicherungseinrichtung; und
- Figur 6: eine erfindungsgemäße Abreißkopfschraube mit einer fünften Ausführungsform der Sicherungseinrichtung.

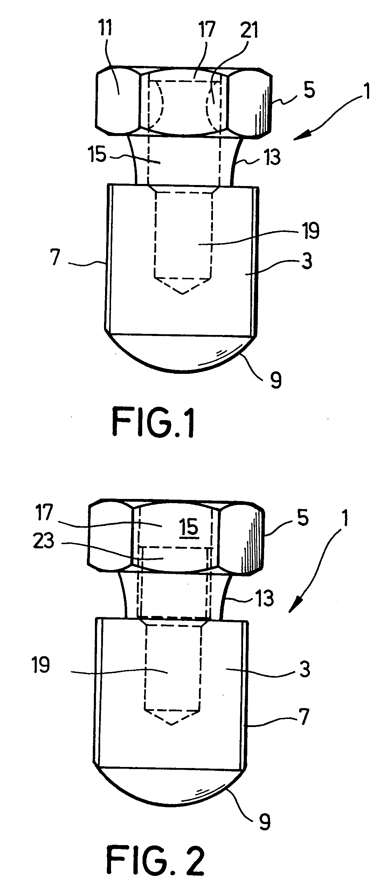

In den Figuren 1 bis 6 sind jeweils einander ähnliche Abreißkopfschrauben dargestellt, bei denen gleiche Teile mit den gleichen Bezugsziffern versehen sind. Im wesentlichen unterscheiden sich die verschiedenen Ausführungsformen durch verschiedene Sicherungseinrichtungen.

Eine erfindungsgemäße Abreißkopfschraube 1 weist einen Klemm- oder Gewindeabschnitt 3 und einen Kopfabschnitt 5 auf. Der Gewindeabschnitt 3 weist einen zylinderförmigen Körper auf, der ein Außengewinde 7 trägt. Das Außengewinde 7 ist vorzugsweise durch Rollen hergestellt, was eine äußerst kurze Fertigungszeit benötigt und sehr präzise herstellbar ist.

Der Gewindeabschnitt 3 weist weiterhin einen Endabschnitt 9 auf, der sphärisch bzw. kugelförmig ausgebildet ist. Der Endabschnitt 9 kommt im eingebauten Zustand in Anlage mit dem zu klemmenden Kabel.

Der Kopfabschnitt 5 weist einen oberen Bereich 11 auf, der als Sechskant ausgebildet ist. Alternativ hierzu kann der obere Bereich 11 des Kopfabschnitts 5 auch eine äußere Kreiskontur aufweisen, die zwei parallel verlaufende, den Kreis schneidende eine Schlüsselweite bildende Einschnitte (nicht dargestellt) aufweist zum Ergreifen durch das Werkzeug. Der Kopfabschnitt 5 weist weiterhin einen sich zum Gewindeabschnitt 3 verjüngenden Bereich 13 auf, der mit dem Gewindeabschnitt 3 im nicht eingebauten Zustand in Verbindung steht. Beispielsweise kann der sich verjüngende Bereich 13 einstückig mit dem Gewindeabschnitt 3 ausgebildet sein. Der geringste Durchmesser des sich verjüngenden Bereichs 13 ist an der Kontaktfläche mit dem Gewindeabschnitt 3 ausgebildet.

Sowohl im Kopfabschnitt 5 als auch in den Gewindeabschnitt 3 hineinreichend ist eine Innenausnehmung 15 vorgesehen, die im dargestellten Falle ebenfalls zwei Bereiche aufweist. Einen Kopfabschnittbereich 17 und einen Gewindeabschnittsbereich 19. Der Gewindeabschnittbereich 19 weist geringere Abmessungen als der Kopfabschnittbereich 17 auf.

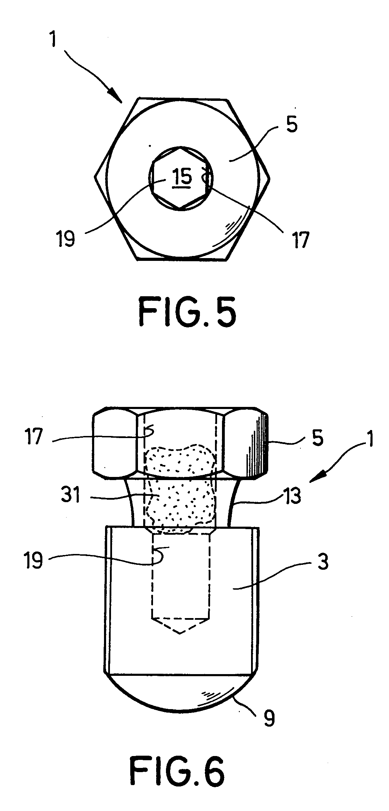

Im dargestellten Ausführungsbeispiel ist der Kopfabschnittbereich 17 der Innenausnehmung 15 als Bohrung ausgebildet, und der Gewindeabschnittbereich 19 der Innenausnehmung 15 ist als Innensechskant ausgebildet. Dies geht besonders deutlich aus Figur 5 hervor.

Zwischen der Außenwand des Kopfabschnittbereichs 17 der Innenausnehmung 15 und dem Außenumfang des sich verjüngenden Bereichs 13 verbleibt somit eine Wandstärke, die derart ausgebildet ist, daß sie sich während des Festklemmens bzw. Anziehens der Abreißkopfschraube zum Klemmen des Kabels verformt und bei einem bestimmten aufgebrachten Anzugsmoment abreißt. Somit kann durch die Wahl einerseits des Werkstoffs der Abreißkopfschraube 1 und andererseits durch die Abmessungen des Kopfabschnittbereichs 17 bezüglich des sich verjüngenden Bereichs 13 eine Anpassung an jedes gewünschte maximale Anzugsdrehmoment erfolgen.

Um zu verhindern, daß mit einem entsprechenden Sechskantschlüssel die Abreißkopfschraube 1 direkt über den Gewindeabschnitt 3 angezogen wird, ist eine Sicherungseinrichtung 21 vorgesehen. Diese ist in der Ausführungsform gemäß Figur 1 als zusätzliche Schicht, beispielsweise Lackschicht am Innenumfang des Kopfabschnittbereichs 17 der Innenausnehmung 15 ausgebildet, derart, daß sie den Innendurchmesser der Innenausnehmung 15 derart verjüngt, daß er kleiner ist als der Innendurchmesser des Gewindeabschnittbereichs 19. Somit wird verhindert, daß ein den Abmessungen des Gewindeabschnittbereichs 19 entsprechendes Werkzeug bis zu diesem vordringen kann.

In Figur 2 ist eine alternative Ausführungsform der Sicherungseinrichtung dargestellt. Diese ist als Stopfen 23 ausgebildet. Dabei weist der Stopfen 23 einen dem Innendurchmesser des Kopfabschnittbereichs 17 angepaßten Außendurchmesser auf, sodaß der Stopfen 23 maximal bis zur Verbindungsfläche des sich verjüngendem Bereichs 13 mit dem Gewindeabschnitt 3 vorstoßen kann, da sich danach die Innenausnehmung 15 mit einem geringeren Durchmesser im Gewindeabschnittbereich 19 fortsetzt. Der Stopfen 23 kann beispielsweise ein Kunststoff- oder Gummistopfen sein. Andere Materialien sind selbstverständlich auch möglich.

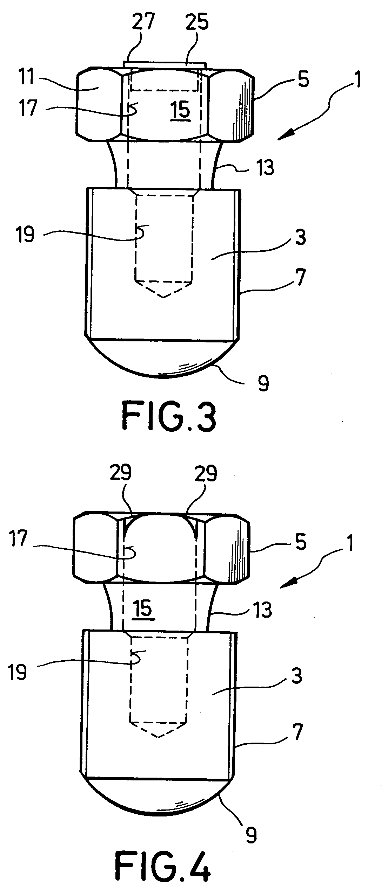

In Figur 3 ist eine dritte Ausführungsform der Sicherungseinrichtung der erfindungsgemäßen Abreißkopfschraube 1 dargestellt. Dieser ist als Verschlußstopfen 25 ausgebildet, der einen Flanschbereich 27 aufweist, der einen Außendurchmesser hat, der größer ist als der Innendurchmesser des Kopfabschnittbereichs 17 der Innenausnehmung 15, sodaß er die Innenausnehmung 15 und den oberen Bereich 11 des Kopfabschnitts 5 teilweise überdeckt.

Ein Bereich des Verschlußstopfens 25 erstreckt sich in den Kopfabschnittbereich 17 der Innenausnehmung 15.

Figur 4 zeigt eine vierte alternative Ausführungsform der Sicherungseinrichtung der erfindungsgemäßen Abreißkopfschraube 1. Hierbei sind Verstemmungen im Randbereich des Kopfabschnittbereichs 17 der Innenausnehmung 15 ausgebildet. Hierbei wird beispielsweise durch Aufschlagen eines Stemmeißels der Rand plastisch nach innen verformt, sodaß sich Materialvorsprünge 29 ergeben, die den Innendurchmesser des Kopfabschnittbereichs 17 soweit verkleinern, daß ein dem Gewindeabschnittsbereich 19 angepaßtes Werkzeug nicht mehr eindringen kann.

In Figur 6 ist eine fünfte Ausführungsform der Sicherungseinrichtung der erfindungsgemäßen Abreißkopfschraube 1 dargestellt. Es handelt sich hierbei um einen Stopfen 31, der in seiner Gestalt verformbar ist, und so zusammengepreßt in die Innenausnehmung 15 eingeführt werden kann. Beispielsweise sind als Materialien geeignet: Stahlwolle, Filz, Knetmassen oder geschäumtes Material. Andere Materialien, die durch Hart- oder andere Lötverfahren, Schweißen oder Erwärmen angebracht werden, um dieselbe Funktion zu erfüllen, sind ebenfalls möglich.

Die Abreißkopfschraube 1 kann bevorzugt aus einer Aluminiumlegierung, aus rollbarem Messing oder aus Stahl gebildet sein.

Insgesamt wird somit eine Abreißkopfschraube geschaffen, durch die es möglich wird, durch Anziehen der Schraube in der entsprechenden Hülse zum Einklemmen des Kabels, ein Abtrennen des Kopfabschnitts 5 von dem Gewindeabschnitt 3 bei einem vorgegebenen Anzugsmoment vorzusehen, wobei durch die Sicherungseinrichtung verhindert wird, daß der Bereich der Innenausnehmung vor dem Abriß des Kopfabschnitts durch ein entsprechendes Werkzeug erreicht wird. Somit kann ein Mißbrauch beim Anziehen der Abreißkopfschraube vermieden werden.

## Patentansprüche

1. Abreißkopfschraube (1) mit einem Gewindeabschnitt (3) und einem abtrennbaren Kopfabschnitt (5), wobei zwischen dem Gewindeabschnitt (3) und dem Kopfabschnitt (5) ein sich im Außendurchmesser verjüngender Bereich (13) vorgesehen ist, und mit einer Innenausnehmung (15), die sich durch den Kopfabschnitt (5) und zumindest teilweise in den Gewindeabschnitt (3) hinein erstreckt, dadurch gekennzeichnet, daß im Bereich des Kopfabschnitts (5) eine Sicherungseinrichtung (21, 23, 25, 29, 31) in der Innenausnehmung (15) vorgesehen ist, durch die das Eindringen eines Drehwerkzeugs in den Gewindeabschnittsbereich der Innenausnehmung verhindert wird.

2. Abreißkopfschraube nach Anspruch 1, dadurch gekennzeichnet, daß die Sicherungseinrichtung (21, 29) eine Einrichtung zur Verjüngung des Innendurchmessers des Kopfabschnittbereichs (17) der Innenausnehmung (15) ist.

3. Abreißkopfschraube nach Anspruch 2, dadurch gekennzeichnet, daß die Einrichtung zur Verjüngung des Innendurchmessers eine am Innenumfang des Kopfabschnittbereichs (17) der Innenausnehmung (15) aufgetragene Materialschicht (21) ist.

4. Abreißkopfschraube nach Anspruch 2, dadurch gekennzeichnet, daß die Einrichtung zur Verjüngung des Innendurchmessers Materialvorsprünge (29) sind, die vom oberen Randbereich des Kopfabschnittbereichs (17) der Innenausnehmung (15) nach innen verstemmt sind.

5. Abreißkopfschraube nach Anspruch 1, dadurch gekennzeichnet, daß die Sicherungseinrichtung ein Verschlußstopfen (23, 25, 31) ist.

6. Abreißkopfschraube nach Anspruch 5, dadurch gekennzeichnet, daß der Verschlußstopfen (23, 31) in dem Kopfabschnittbereich (17) der Innenausnehmung (15) versenkt angeordnet ist.

7. Abreißkopfschraube nach Anspruch 5, dadurch gekennzeichnet, daß der Verschlußstopfen (25) einen Flanschbereich (27) aufweist, der größer ist als der Durchmesser des Kopfabschnittbereichs (17) der Innenausnehmung (15).

8. Abreißkopfschraube nach einem der Ansprüche 1 bis 7, dadurch gekennzeichnet, daß die Außenkontur des Kopfabschanitts (5) überwiegend kreisförmig ausgebildet ist, wobei der Kreis zwei parallel verlaufende, ihn schneidende verkürzende geradlinige Außenabschnitte zur Bildung einer Schlüsselweite aufweist.

9. Abreißkopfschraube nach einem der Ansprüche 1 bis 7, dadurch gekennzeichnet, daß der Kopfabschnitt (5) als Außensechskant ausgebildet ist.

10. Abreißkopfschraube nach einem der Ansprüche 1 bis 9, dadurch gekennzeichnet, daß der Kopfabschnittbereich (17) der Innenausnehmung (15) als Bohrung ausgebildet ist.

11. Abreißkopfschraube nach einem der Ansprüche 1 bis 10, dadurch gekennzeichnet, daß der sich verjüngende Bereich (13) kegelstumpfförmig ausgebildet ist.

12. Abreißkopfschraube nach einem der Ansprüche 1 bis 11, dadurch gekennzeichnet, daß der Gewindeabschnitt (3) ein gerolltes Außengewinde (7) aufweist.

13. Abreißkopfschraube nach einem der Ansprüche 1 bis 12, dadurch gekennzeichnet, daß sie aus einer Aluminiumlegierung, einem rollbaren Messing oder aus Stahl gebildet ist.

## Claims

1. Shear-off cap screw (1) comprising a thread section (3) and a separable head section (5), wherein a portion (13) with a tapering outside diameter is provided between the thread section (3) and the head section (5), and comprising an inner recess (15), extending into the head section (5) and at least partially into the thread section (3), **characterized in that** in the region of the head section, a safety means (21, 23, 25, 29, 31) is provided in the inner recess (15), by means of which the penetration of a screwing tool into the thread section portion of the inner recess is prevented.

2. Shear-off cap screw according to claim 1, **characterized in** **that** the safety means (21, 29) is a means for tapering the inner diameter of the head section portion (17) of the inner recess (15).

3. Shear-off cap screw according to claim 2, **characterized in** **that** the means for tapering the inner diameter is a material layer (21) applied on the inner periphery of the head section portion (17) of the inner recess (15).

4. Shear-off cap screw according to claim 2, **characterized in** **that** the means for tapering the inner diameter are material projections (29), caulked inwardly from the upper edge section of the head section portion (17) of the inner recess (15).

5. Shear-off cap screw according to claim 1, **characterized in** **that** the safety means is a closing plug (23, 25, 31).

6. Shear-off cap screw according to claim 5, **characterized in** **that** the closing plug (23, 31) is arranged countersunk in the head section portion (17) of the inner recess.

7. Shear-off cap screw according to claim 5, **characterized in** **that** the closing plug (25) comprises a flange portion (27), which is larger than the diameter of the head section portion (17) of the inner recess (15).

8. Shear-off cap screw according to one of claims 1 to 7, **characterized in that** the outer contour of the head section (5) is mostly circular, wherein the circle comprises two parallely extending, shortening, straight line outer sections intersecting said circle for forming a width across flats of a wrench.

9. Shear-off cap screw according to one of claims 1 to 7, **characterized in that** the head section (5) is formed as an outer hexagon.

10. Shear-off cap screw according to claims 1 to 9, **characterized in that** the head section portion (17) of the inner recess (15) is formed as a bore.

11. Shear-off cap screw according to one of claims 1 to 10, **characterized in that** the tapering portion (13) is formed as a truncated cone.

12. Shear-off cap screw according to one of claims 1 to 11, **characterized in that** the thread section (3) comprises a rolled external thread (7).

13. Shear-off cap screw according to one of claims 1 to 12, **characterized in that** it is formed of an alluminum alloy, of a rollable brass or of steel.

## Revendications

1. Vis à tête frangible (1) comportant une partie filetée (3) et une partie formant tête (5) séparable, une zone de diamètre rétréci (13) étant prévue entre la partie filetée (3) et la partie formant tête (5), et comportant un évidement intérieur (15) s'étendant à travers la partie formant tête (5) et, au moins partiellement, dans la partie filetée (3), caractérisée en ce que, dans la zone de la partie formant tête (5), un dispositif de blocage (21, 23, 25, 29, 31) est prévu dans l'évidement intérieur (15) pour empêcher la pénétration d'un outil d'entraînement en rotation dans la zone de la partie filetée de l'évidement intérieur.

2. Vis à tête frangible selon la revendication 1, caractérisée en ce que le dispositif de blocage (21, 29) est un dispositif destiné à rétrécir le diamètre intérieur de la zone de la partie formant tête (17) de l'évidement intérieur (15).

3. Vis à tête frangible selon la revendication 2, caractérisée en ce que le dispositif destiné à rétrécir le diamètre intérieur est une couche de matière (21) appliquée sur le pourtour intérieur de la zone de la partie formant tête (17) de l'évidement intérieur (15).

4. Vis à tête frangible selon la revendication 2, caractérisée en ce que le dispositif destiné à rétrécir le diamètre intérieur est constitué par des ressauts de matière (29), qui sont matés, à partir du bord supérieur de la zone de la partie formant tête (17) de l'évidement intérieur (15), vers l'intérieur.

5. Vis à tête frangible selon la revendication 1, caractérisée en ce que le dispositif de blocage est un bouchon de fermeture (23, 25, 31).

6. Vis à tête frangible selon la revendication 5, caractérisée en ce que le bouchon de fermeture (23, 31) est noyé dans la zone de la partie formant tête (17) de l'évidement intérieur (15).

7. Vis à tête frangible selon la revendication 5, caractérisée en ce que le bouchon de fermeture (25) présente une partie formant bride (27) qui est plus grosse que le diamètre de la zone de la partie formant tête (17) de l'évidement intérieur (15).

8. Vis à tête frangible selon l'une des revendications 1 à 7, caractérisée en ce que le contour extérieur de la partie formant tête (5) est conformé de façon principalement circulaire, le cercle présentant deux parties extérieures droites, parallèles, le coupant et le rétrécissant, afin de former une partie adaptée à une ouverture de clé.

9. Vis à tête frangible selon l'une des revendications 1 à 7, caractérisée en ce que la partie formant tête (5) est conformée extérieurement en hexagone.

10. Vis à tête frangible selon l'une des revendications 1 à 9, caractérisée en ce que la zone de la partie formant tête (17) de l'évidement intérieur (15) est conformée en perçage.

11. Vis à tête frangible selon l'une des revendications 1 à 10, caractérisée en ce que la zone rétrécie (13) est conformée en tronc de cône.

12. Vis à tête frangible selon l'une des revendications 1 à 11, caractérisée en ce que la partie filetée (3) présente un filetage extérieur (7) roulé.

13. Vis à tête frangible selon l'une des revendications 1 à 12, caractérisée en ce qu'elle est constituée en un alliage d'aluminium, en laiton roulable ou en acier.
